# EUROPÄISCHE PATENTANMELDUNG

(11) **EP 0 824 986 A1**
(43) Veröffentlichungstag der Anmeldung: **25.02.1998**
(21) Anmeldenummer: 97111996.1
(22) Anmeldetag: 15.07.1997
(51) Int. Cl.: B23K 9/04

(54) **Verfahren zum Herstellen einer korrosionsbeständingen Verbindung von Rohren**

(30) Priorität: 22.08.1996 DE 19633754; 19.09.1996 DE 19638228
(71) Anmelder: CASTOLIN S.A., CH-1025 Lausanne - St. Sulpice (CH)
(72) Erfinder: Polak, Reinhard, Dr., 1020 Wien (AT); Heimgartner, Peter, Dr., 1025 St. Sulpice (CH)
(74) Vertreter: Hiebsch, Gerhard F., Dipl.-Ing.

(57) **Zusammenfassung**

Bei einem Verfahren zum Herstellen einer heißgaskorrosionsbeständigen Verbindung von durch eine thermisch gespritzte Schicht korrosionsgeschützten Rohren, wird das eine zu verschweißende Rohr im Bereich seiner dem zweiten Rohr benachbarten Stoßkante vor dem thermischen Spritzen durch Auftragsschweißen mit einem korrosionsbeständigen Werkstoff beschichtet.

## Beschreibung

Die Erfindung betrifft ein Verfahren zum Herstellen einer heißkorrosionsbeständigen -- insbesondere einer gegen Heizgase korrosionsbeständigen -- Verbindung von korrosionsgeschützten Rohren.

Das Verbinden von Rohren od.dgl. Strängen durch Schweißen oder ähnliche Verfahren ist -- besonders in Großfeuerungsanlagen wie etwa thermischen Kraftwerken mit Kohle- oder Ölfeuerung, Schwarzlaugekesseln, Müllverbrennungs- und Chemiemüllverbrennungsanlagen -- nur dann möglich, wenn in den zu verbindenden Stoßbereichen keine Beschichtung vorhanden ist; die korrosionsbeständigen Spritzschichten bestehen in den meisten Fällen aus hochlegierten Legierungen, die zu einer unbekannten Zusammensetzung der Schweißnaht führen, wenn sie beim Schweißen umgeschmolzen und mit Grundwerkstoff und Schweißzusatzwerkstoff legiert werden. Je nach Zusammensetzung der Schicht des Schweißzusatzwerkstoffes und des Grundwerkstoffes kann ein Verspröden -- und damit eine Gefahr zur Rißbildung oder eine schlechte Korrosionsbeständigkeit -- in dieser Zone die Folge sein.

Um die oben beschriebenen Gefahren zu vermeiden, darf die zu schweißende Stelle nicht mit einer Korrosionsschicht vrsehen sein, und es muss nach dem Schweißen "vor Ort" die nichtbeschichtete Stelle zur Meidung verstärkter Korrosion ebenfalls vor Ort beschichtet werden. Das nachträgliche Beschichten der nicht beschichteten Zone mit der Schweißung ist sehr umständlich und kostenintensiv.

In Kenntnis dieser Gegebenheiten hat sich der Erfinder das Ziel gesetzt, eine Abhilfe der erkannten Mängel zu schaffen und vor allem die Kosten sowie die Arbeitszeiten vor Ort wesentlich zu senken.

Zur Lösung dieser Aufgabe führt die Lehre des unabhängigen Patentanspruches; die Unteransprüche geben günstige Ausgestaltungen an.

Erfindungsgemäß wird bei den die Verbindung ergebenden beiden durch eine thermisch gespritzte Schicht korrosionsgeschützten Rohren das zu verschweißende Rohr im Bereich seiner dem zweiten Rohr benachbarten Stoßkante vor dem thermischen Spritzen durch Auftragsschweißen mit einem korrosionsbeständigen Werkstoff beschichtet.

Nach einem weiteren Merkmal der Erfindung wird dieses Auftragsschweißen in einer Breite -- der aufgeschweißten korrosionsbeständigen Schicht von der Trennebene der Rohre -- von etwa 0,5 bis 150 mm durchgeführt; besonders bevorzugte Breiten liegen zwischen 2 und 50 mm, insbesondere zwischen 5 und 30 mm. Zudem soll eine Schichtdicke der im Bereich der Trennebene aufgeschweißten Schicht von etwa 0,5 bis 10,0 mm -- vorzugsweise 1 und 5,0 mm -- entstehen.

Diese Maßgaben führen zu einem neuartigen Verbindungsverfahren für korrosionsgeschützte Rohre, welches die vom Erfinder gesehene Aufgabe in bestechender Weise zu lösen vermag.

Als günstig hat es sich zudem erwiesen, im Bereich der erwähnten Trennebene -- also an den Stoßkanten -- vor dem thermischen Spritzen ein korrosionsgeschütztes Rohrstück anzuschweißen. Dazu kann ein Rohrstück aus korrosionsbeständigem Werkstoff eingesetzt werden oder ein Rohrstück, das von einer Schicht aus korrosionsbeständigem Werkstoff umgeben ist; letztgenannte Schicht wird erfindungsgemäß entweder thermisch aufgespritzt oder aber aufgeschweißt.

Auch liegt es im Rahmen der Erfindung, die Rohre an ihren Stoßkanten durch eine Wurzellage aus einem Kesselstahl sowie eine diese umgebende Decklage aus korrosionsbeständiger Legierung zusammenzuschweißen. Dabei wird die Decklage vorteilhafterweise in eine aufgeschweißte korrosionsbeständige Schicht eingefügt.

Als Schweißzusatzwerkstoff zum Aufschweißen der korrosionsbeständigen Schicht an der Trennebene -- oder auf dem Rohrstück -- soll bevorzugt eine Nickelbasis-Legierung eingesetzt werden. Jedoch ist es auch denkbar, eine Nickel-Chrombasis-Legierung oder eine Kobalt-Legierung als Schweisszusatzwerkstoff zum Aufschweißen der korrosionsbeständigen Schicht -- an der Trennebene oder auf dem Rohrstück -- zu verwenden, gegebenenfalls eine Eisenbasis-Legierung oder eine Eisen-Chrombasis-Legierung.

Nach einem anderen Merkmal der Erfindung soll als korrosionsbeständige Deckschicht eine selbstfließende Legierung aufgespritzt und eingeschmolzen werden; hierzu haben sich folgende selbstfließende Legierungen als günstig herausgestellt:
* Ni-Cr-B-Si-Legierungen;
* Ni-B-Si-Legierungen;
* Kobalt-Legierungen.

Bevorzugt soll zudem als korrosionsbeständige Deckschicht eine nicht eingeschmolzene Legierung aufgespritzt werden, nämlich
* eine Nickelbasis-Legierung oder
* eine Nickel-Chrombasis-Legierung oder
* eine Eisenbasis-Legierung oder
* eine Kobaltbasis-Legierung.

Um die erwähnte geschweißte Deckschicht an der Trennebene herzustellen, werden ein Plasmapulver-Auftragsschweißverfahren, ein Lichtbogen-Schweißverfahren oder ein autogenes Schweißverfahren eingesetzt, zum Herstellen der aufgespritzten Deckschicht hingegen ein thermisches Spritzverfahren, ein autogenes Flammspritzverfahren, ein Hochgeschwindigkeits-Flammspritzverfahren (HVOF) oder aber ein Plasmaspritzverfahren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine teilweise geschnittene Seitenansicht einer Rohrverbindung nach dem Stande der Technik mit zwei eine thermisch gespritzte Korrosionsschutzschicht aufweisenden Rohren;
- Fig. 2 bis Fig. 4:: teilweise geschnittene Seitenansichten erfindungsgemäßer Rohrverbindungen in unterschiedlichen Ausführungen;
- Fig. 5:: einen Ausschnitt aus einer geschnittenen Seitenansicht einer Rohrverbindung eines durch Schweißen beschichteten Rohres mit einer Wurzellage aus Kesselstahl und einer Decklage aus einer korrosionsbeständigen Legierung;
- Fig. 6:: einen Teilschnitt durch eine Rohrverbindung mit einem durch Schweißen beschichteten Rohr.

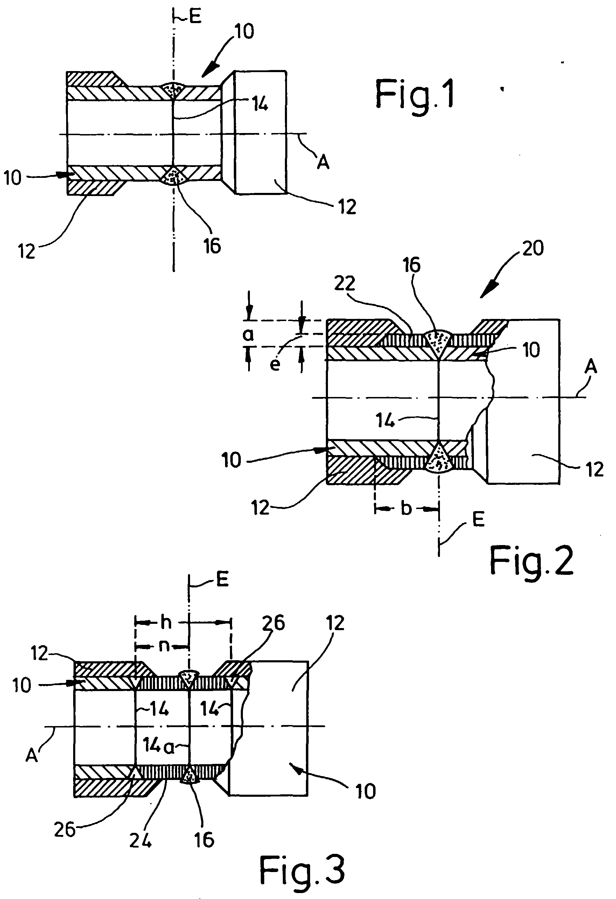

Bei einer Rohrverbindung nach Fig. 1 mit zwei in eine gemeinsame Längsachse A fallenden Rohren 10 -- beispielsweise Überhitzer-, Vorwärmer- oder Kesselrohre -- sind diese mit einer thermisch gespritzten Korrosionsschutzschicht 12 ummantelt sowie an ihren -- eine Trennebene E bestimmenden --Stosskanten 14 durch eine Schweissnaht 16 aus korrosionsbeständigem Werkstoff zusammengehalten.

Fig. 2 zeigt eine erfindungsgemäße Rohrverbindung 20 von Rohren 10 mit sie im Bereich ihrer Stoßkanten 14 umgebendem aufgeschweißtem Korrosionsschutzmantel 22. Dessen axiale Länge b von der Trennebene E beträgt beispielsweise 0,5 bis 50 mm, seine Schichtdicke e hier etwa 0,5 bis 10,0 mm. Auf diese Rohre 10 wird nach dem Aufschweißen des Korrosionsschutzmantels 22 die überlagernde thermisch gespritzte Korrosionsschutzschicht 12 der Dicke α aufgetragen.

Eine Rohrverbindung nach Fig. 3 enthält zwischen den in Abstand h zueinander stehenden Rohren 10 zwei Rohrstümpfe 24 aus korrosionsbeständigem Werkstoff der beidseits der Trennebene E vorgesehenen jeweiligen axialen Länge n, welche vor dem thermischen Beschichtungsvorgang zum Erzeugen der Schicht 12 mittels einer Schweißnaht 26 an die Stoßkanten 14 der Rohre 10 angeschweißt, miteinander an ihren aneinanderliegenden Stoßkanten 14ₐ in der Trennebene E durch die korrosionsbeständige Schweißnaht 16 verbunden sowie anschließend mit diesen Rohren 10 gemeinsam durch thermisches Spritzen korrosionsbeständig -- Schicht 12 --überzogen worden sind.

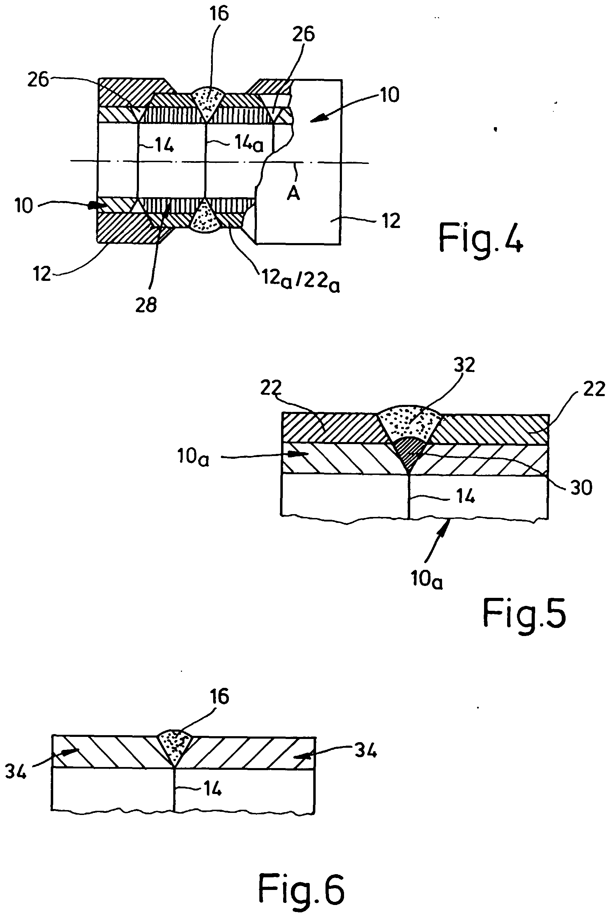

Auch die Rohrverbindung nach Fig. 4 erfaßt zwei an den Rohren 10 -- vor deren Beschichtung mittels thermischen Spritzens -- mit einer korrosionsbeständigen Schweißnaht 26 angeschweißte Rohrstücke 28, die aus plattiertem Rohr bestehen oder vorher ihrerseits mit einer thermisch gespritzten korrosionsbeständigen Außenschicht 12ₐ oder einer aufgeschweißten korrosionsbeständigen Außenschicht 22ₐ ausgestattet worden sind.

Den Verbindungsbereich zweier durch Schweißen beschichteter Rohre 10ₐ mit einer Wurzellage 30 aus Kesselstahl und einer Decklage 32 aus einer korrosionsbeständigen Legierung offenbart Fig. 5; in Fig. 6 ist ein Rohrende 34 aus einer korrosionsbeständigen Legierung dargestellt, welches mittels der erwähnten korrosionsbeständigen Schweißnaht 16 an ein anderes Rohrende 34 angeschlossen ist.

Die Anwendung der beschriebenen Rohrverbindungen wird nachstehend noch an Einsatzbeispielen erörtert.

### Beispiel 1:

In einem Schwarzlaugen-Kessel der Papierindustrie sollten Überhitzerrohre gegen Korrosion und Erosion durch das Aufbringen einer thermisch gespritzten Schicht geschützt werden. Da die Überhitzer eine langgestreckte U-Form hatten, mußten die Überhitzerrohre eines Durchmessers von 38 mm und einer Länge von 4 000 mm sowie die Rohrbogen mit einem Radius von 400 mm zur Beschichtung in jeweils zwei lineare Rohre und einen Bogen getrennt werden.

Nach diesem Arbeitsgang wurde der äußere Rohrumfang an der Schnittstelle durch Lichtbogenhandschweißen mit Elektroden 50 mm breit aufgeschweißt. Die zum Aufschweißen verwendete Legierung hatte die folgende Zusammensetzung (in Gew.-%):

| | |
|---|---|
| C | 0,08 |
| Cr | 27,0 |
| Ni | 32,0 |
| Nb | 1,0 |
| Fe | Rest. |

Das Rohr mit den so geschützten Enden wurde nun mit gebrochenem Stahlkies gestrahlt und die Oberfläche desselben aktiviert. Dann wurde das vorbereitete Rohr an der nichtbeschichteten Fläche durch Flammspritzen mit einer Schicht der Schichtdicke von 0,7 mm eines pulverförmigen Werkstoffs der folgenden Zusammensetzung beschichtet und diese eingeschmolzen (in Gew.-%):

| | |
|---|---|
| C | 0,55 |
| Cr | 26,0 |
| B | 3,75 |
| Si | 2,75 |
| Fe | 0,2. |
| Ni | Rest. |

Nach Fertigstellung der Beschichtung wurden die Rohre mit einer Elektrode einer korrosionsbeständigen Zusammensetzung zusammengeschweißt und im Kessel montiert.

Bei der nach einem Jahr Standzeit erfolgten Kontrolle der beschichteten Rohre war an der Oberfläche derselben kein Korrosionsangriff feststellbar.

### Beispiel 2

In einem thermischen Kraftwerk mit einer Kohlenstaubfeuerung sollten Überhitzer- und Vorwärmerrohre vor dem Einbau in den Kessel beschichtet und damit gegen Korrosion und Erosion geschützt werden. Da die Korrosion in der Hauptsache durch Schwefelverbindungen im Rauchgas ausgelöst wird, war ein Werkstoff für diese Belastung auszuwählen.

Auch hier sollten -- wie bei Beispiel 1 -- die Rohrenden vor der eigentlichen Beschichtung durch thermisches Spritzen mittels Aufschweißen der Übergangszone geschützt werden. Die Zusammensetzung der aufgeschweißten Schicht war (in Gew.-%):

| | |
|---|---|
| C | 0,015 |
| Cr | 27,0 |
| Ni | 31,0 |
| Mo | 6,5 |
| Cu | 1,5 |
| N | 0,2 |
| Fe | Rest. |

Nach dem Aufschweißen der Schicht wurden die Rohre durch Strahlen mit Korund für das Beschichten vorbereitet und anschließend durch Plasmaspritzen mit einem pulverförmigen Spritzwerkstoff der folgenden Zusammensetzung beschichtet (in Gew.-%):

| | |
|---|---|
| C | 0,2 |
| Cr | 28,0 |
| Al | 6,0 |
| Mo | 3,0 |
| Fe | Rest. |

Die durch Aufspritzen beschichteten Rohre wurden ohne thermische Nachbehandlung eingebaut. Auch hier wurde die Montageschweißung mit einer gegen die von den Schwefelverbindungen ausgelöste Korrosion beständigen Elektrode durchgeführt.

Bei einem normalen Unterhaltsstop wurden die Schichten kontrolliert; an der Oberfläche waren nur sehr schwache Korrosionserscheinungen sichtbar. Die nicht beschichteten Rohre mußten nach dieser Laufzeit ausgetauscht werden.

### Beispiel 3:

In einer Großfeuerungsanlage eines thermischen Kraftwerks sollten im Vorwärmerbereich Rohrbündel durch eine thermisch gespritzte Schicht geschützt werden. Das wesentliche Problem an diesen Rohrbündeln war die Korrosion durch die an diesem Standort -- England -- typischen hohen Chlorgehalte (bis zu 1 %) in der Kohle.

Die Zusammensetzung der zum Schweißen für die Zone von 40 mm Länge an den Rohrenden ausgewählten Schweißzusatzwerkstoff war (in Gew.-%):

| | |
|---|---|
| C | 0,1 |
| Cr | 27,0 |
| Fe | 23,0 |
| Si | 2,7 |
| Ni | Rest. |

Nach einer Vorbereitung durch Strahlen wurden die Rohre mittels Hochgeschwindigkeits-Flammspritzens mit dem folgenden Spritzwerkstoff in einer Schichtdicke von 0,4 mm beschichtet (in Gew.-%):

| | |
|---|---|
| C | 0,01 |
| Cr | 50,0 |
| Al | 5,0 |
| Si | 1,2 |
| Ni | Rest. |

Die so entstandene Beschichtung zeigte bei der Prüfung der Oberfläche nach einem längeren Zeitintervall bezüglich der Unversehrtheit sehr gute Ergebnisse.

### Beispiel 4:

In einem Kessel zur Heißdampferzeugung für die Produktion einer Papierfabrik, in dem hauptsächlich Holzabfälle der Cellulose-Erzeugung verbrannt werden, traten durch das Harz in den Spänen relativ starke Korrosionsangriffe auf.

Auch in diesem Falle wurde das Problem im Bereich des Verbindungsschweißens der Rohre durch Aufschweißen mit einem beständigen Werkstoff gelöst. Als Schweißverfahren wurde in diesem Falle Plasmapulverauftragsschweißen eingesetzt. Der pulverförmige Schweißzusatzwerkstoff hatte die folgende Zusammensetzung (in Gew.-%):

| | |
|---|---|
| C | 0,1 |
| Fe | 23,0 |
| Cr | 27,0 |
| Si | 2,7 |
| Ni | Rest. |

Als Deckschicht für den Rest des Rohres wurde nach Vorbereitung durch Strahlen ein selbstfließendes Nickel-Chrom-Bor-Silizium-Legierungspulver ausgewählt, durch ein autogenes Flammspritzverfahren aufgespritzt sowie nachträglich eingeschmolzen. Die Zusammensetzung des Legierungspulvers (in Gew.-%) war folgende:

| | |
|---|---|
| C | 0,5 |
| Cr | 15,5 |
| Si | 4,0 |
| B | 3,0 |
| Fe | 3,2 |
| Ni | Rest. |

Bei einem Unterhaltsstop nach 8340 Stunden wurde festgestellt, daß die -- durch das Harz in den Spänen ausgelöste -- Korrosionsprobleme bei dieser Beschichtung nicht mehr auftraten.

### Beispiel 5:

In einer Müllverbrennungsanlage, in der hauptsächlich Hausmüll verbrannt wird, entstand an den Überhitzerrohren verstärkt Korrosion, die es notwendig werden ließ, die Rohre in Abständen von 6 bis 8 Monaten auszutauschen.

Ungelöst blieb an dieser Anlage das Korrosionsproblem an den Schweißstellen, an denen die beschichteten Rohre zusammengefügt worden waren.

Zur Lösung dieses Problems wurde an den Enden der Überhitzerrohre ein korrosionsbeständiges kurzes Rohrstück der folgenden Zusammensetzung angeschweißt (in Gew.-%):

| | |
|---|---|
| C | 0,05 |
| Cr | 21,0 |
| Mo | 9,0 |
| Nb | 3,5 |
| Fe | 2,0 |
| Ni | Rest. |

Die Rohre wurden nun durch einen Strahlvorgang vorbereitet und anschließend über die gesamte Länge -- mit Ausnahme der Enden, an denen die Hälfte der angeschweißten Rohre für die Schweißung frei gelassen wurde -- mit einer Legierung der folgenden Zusammensetzung durch Plasmaspritzen mit nachträglichem Einschmelzen beschichtet (in Gew.-%):

| | |
|---|---|
| C | 0,8 |
| Cr | 26,0 |
| Fe | 1,5 |
| B | 3,5 |
| Si | 4,0 |
| Ni | Rest. |

Durch diese Maßnahme konnte das Korrosionsproblem im Bereich der Schweißnaht mit Erfolg gelöst werden.

### Beispiel 6:

In einer Chemiemüll-Verbrennungsanlage traten durch die sehr hohen Verbrennungstemperaturen verstärkt Korrosionsprobleme auf, die es notwendig machten, die vor dem Übergang der Heißgase in die Filteranlage liegenden Wärmeaustauscherrohre vor ihrem Einbau mit einer beständigen Schicht zu versehen.

Da bei dieser Anlage die Korrosionsbelastung wesentlich höher lag als bei anderen Müllverbrennungsanlagen, wurde es auch hier notwendig, das Rohr im Bereich der Schweißnaht vorab durch Auftragsschweißen zu beschichten. Die Zusammensetzung des Schweißgutes (in Gew.-%) lag bei:

| | |
|---|---|
| C | 0,05 |
| Cr | 21,0 |
| Mo | 9,0 |
| Nb | 3,5 |
| Fe | 2,0 |
| Ni | Rest. |

Nach dem Vorbereiten der Oberfläche des gesamten Rohres durch Strahlen mit Korund wurde diese mittels autogenen Flammspritzens mit nachträglichem Einschmelzen beschichtet. Wegen der hohen Temperaturen und der auftretenden Korrosion wurde folgender Spritzwerkstoff (in Gew.-%) eingesetzt:

| | |
|---|---|
| C | 0,5 |
| Cr | 13,2 |
| Fe | 2,8 |
| B | 2,2 |
| Si | 3,0 |
| Ni | Rest. |

Auch diese Lösung erwies sich als sehr gut; es entstand so die Möglichkeit, das Intervall der Unterhaltarbeiten für diese Verbrennungsanlage von sechs auf zwölf Monate zu verlängern.

## Patentansprüche

1. Verfahren zum Herstellen einer heißgaskorrosionsbeständigen Verbindung (20) von durch eine thermisch gespritzte Schicht (12) korrosionsgeschützten Rohren (10), bei dem das eine zu verschweißende Rohr im Bereich seiner dem zweiten Rohr benachbarten Stoßkante (14) vor dem thermischen Spritzen durch Auftragsschweißen mit einem korrosionsbeständigen Werkstoff beschichtet wird.

2. Verfahren nach Anspruch 1, gekennzeichnet durch eine Breite (b) der aufgeschweißten korrosionsbeständigen Schicht (22) beidseits der Trennebene (E) der Rohre (10) von etwa 0,5 bis 150 mm.

3. Verfahren nach Anspruch 2, gekennzeichnet durch eine Breite (b) der aufgeschweißten Schicht (22) zwischen 2 und 50 mm, vorzugsweise zwischen 5 und 30 mm.

4. Verfahren nach einem der Ansprüche 1 bis 3, gekennzeichnet durch eine Schichtdicke (e) der im Bereich der Trennebene (E) aufgeschweißten Schicht (22) etwa zwischen 0,5 und 10,0 mm, vorzugsweise zwischen 1 und 5,0 mm.

5. Verfahren nach einem der Ansprüche 1 bis 4, dadurch gekennzeichnet, daß vor dem thermischen Spritzen ein korrosionsgeschütztes Rohrstück (24, 28) an das/die Rohr/e (10) angeschweißt wird, wobei gegebenenfalls das Rohrstück (24) aus korrosionsbeständigem Werkstoff besteht oder das Rohrstück (28) von einer Schicht (12ₐ, 22ₐ) aus korrosionsbeständigem Werkstoff umfangen ist.

6. Verfahren nach Anspruch 5, dadurch gekennzeichnet, daß die das Rohrstück (28) umfangende Schicht (12ₐ) aus korrosionsbeständigem Werkstoff thermisch aufgespritzt oder aufgeschweißt wird.

7. Verfahren nach einem der Ansprüche 1 bis 6, dadurch gekennzeichnet, daß die Rohre (10ₐ) an ihren Stoßkanten (14) durch eine Wurzellage (30) aus einem Kesselstahl sowie einer diese umgebenden Decklage (32) aus korrosionsbeständiger Legierung zusammengeschweißt werden, wobei gegebenenfalls die Decklage (32) in eine aufgeschweißte korrosionsbeständige Schicht (22) eingefügt wird (Fig. 5).

8. Verfahren nach einem der Ansprüche 1 bis 7, gekennzeichnet durch eine Nickelbasis-Legierung als Schweißzusatzwerkstoff zum Aufschweißen der korrosionsbeständigen Schicht (22, 22ₐ) an der Trennebene (E) oder auf dem Rohrstück (28) oder durch eine Nickel-Chrombasis-Legierung als Schweißzusatzwerkstoff zum Aufschweißen der korrosionsbeständigen Schicht (22, 22ₐ) an der Trennebene (E) oder auf dem Rohrstück (28).

9. Verfahren nach einem der Ansprüche 1 bis 7, gekennzeichnet durch eine Kobalt-Legierung als Schweißzusatzwerkstoff zum Aufschweißen der korrosionsbeständigen Schicht (22, 22ₐ) an der Trennebene (E) oder auf dem Rohrstück (28) oder durch eine Eisenbasis-Legierung als Schweißzusatzwerkstoff zum Aufschweißen der korrosionsbeständigen Schicht (22, 22ₐ) an der Trennebene (E) oder auf dem Rohrstück (28) oder durch eine Eisen-Chrombasis-Legierung als Schweißzusatzwerkstoff zum Aufschweißen der korrosionsbeständigen Schicht (22, 22ₐ) an der Trennebene (E) oder auf dem Rohrstück (28).

10. Verfahren nach einem der Ansprüche 1 bis 9, dadurch gekennzeichnet, daß als korrosionsbeständige Deckschicht (12, 12ₐ) des Rohres (10) eine selbstfließende Legierung aufgespritzt und eingeschmolzen wird, wobei gegebenenfalls als korrosionsbeständige Deckschicht (12, 12ₐ) des Rohres (10) eine selbstfließende Ni-Cr-B-Si-Legierung oder eine selbstfließende Ni-B-Si-Legierung oder eine selbstfließende Kobalt-Legierung aufgespritzt und eingeschmolzen wird.

11. Verfahren nach einem der Ansprüche 1 bis 9, dadurch gekennzeichnet, daß als korrosionsbeständige Deckschicht (12, 12ₐ) des Rohres (10) eine nicht eingeschmolzene Legierung aufgespritzt wird.

12. Verfahren nach Anspruch 11, gekennzeichnet durch eine nicht eingeschmolzene Nickelbasis-Legierung oder eine nicht eingeschmolzene Nickel-Chrombasis-Legierung oder eine nicht eingeschmolzene Eisenbasis-Legierung oder durch eine nicht eingeschmolzene Kobaltbasis-Legierung.

13. Verfahren nach wenigstens einem der Ansprüche 1 bis 9, dadurch gekennzeichnet, daß zum Herstellen der geschweißten Schicht (22, 22ₐ) im Bereich der Trennebene (E) ein Plasmapulver-Auftragsschweißverfahren oder ein autogenes Schweißverfahren oder ein Lichtbogen-Schweißverfahren eingesetzt wird.

14. Verfahren nach einem der Ansprüche 10 bis 12, durch gekennzeichnet, daß zum Herstellen der aufgespritzten Deckschicht (12, 12ₐ) ein thermisches Spritzverfahren eingesetzt wird.

15. Verfahren nach einem der Ansprüche 10 bis 12, dadurch gekennzeichnet, daß zum Herstellen der aufgespritzten Deckschicht (12, 12ₐ) ein autogenes Flammspritzverfahren oder ein Hochgeschwindigkeits-Flammspritzverfahren (HVOF) eingesetzt wird.

16. Verfahren nach wenigstens einem der Ansprüche 10 bis 12, dadurch gekennzeichnet, daß zum Herstellen der aufgespritzten Deckschicht (12, 12ₐ) ein Plasmaspritzverfahren eingesetzt wird.
